# EUROPÄISCHE PATENTSCHRIFT

(11) **EP 0 852 989 B1**
(45) Veröffentlichungstag und Bekanntmachung des Hinweises auf die Patenterteilung: **23.10.2002**
(21) Anmeldenummer: 97121516.5
(22) Anmeldetag: 06.12.1997
(51) Int. Cl.: B23Q 16/00, B65G 47/22, B65G 57/00

(54) **Vorrichtung und Verfahren zur Bereitstellung insbesondere eines Ladeträgers für Packungseinheiten**
Device and method of providing, in particular, a pallet for packaging units
Dispositif et procédé pour fournir notamment une palette à des unités d'emballage

(30) Priorität: 08.01.1997 DE 19700359
(43) Veröffentlichungstag der Anmeldung: 15.07.1998
(73) Patentinhaber: bielomatik Leuze GmbH + Co, D-72639 Neuffen (DE)
(72) Erfinder: Pizzi, Fausto, S. Giovanni in Persiceto (BO) (IT); Forni, Gilberto, S. Giovanni in Persiceto (BO) (IT)
(74) Vertreter: Patentanwälte Ruff, Wilhelm, Beier, Dauster & Partner

(56) Entgegenhaltungen:
- DE-A- 4 101 038
- GB-A- 2 207 907
- US-A- 4 565 129

## Beschreibung

Die Erfindung betrifft eine Vorrichtung gemäß dem Oberbegriff des Anspruchs 1 (DE-A-4 101 038) sowie ein Verfahren, mit welchen z.B. ein Ladeträger für Packungseinheiten o. dgl., insbesondere eine Tragpalette für umverpackte Papierriese, in eine genaue Lageposition überführt werden kann. Dabei kann der Ladeträger in dieser Position nacheinander mit übereinander zu stapelnden Packungseinheiten in einer Ladestation beladen werden.

Die Packungseinheit oder ein anderer Gegenstand besteht z.B. aus einer Vielzahl von mehreren hundert oder tausend zu einem kubischen Block aufeinander gestapelten Papieren, die gemeinsam in einer Umhüllung aus beschichtetem Papier o.dgl. verpackt sein können. Die Blätter werden nach dem Längs- und Querschnitt von einer Papierbahn zuerst einander überlappend geschuppt, dann zu kubischen Stapeln zusammengeschoben, danach auf einer Palette zu einem Großstapel aufeinandergeschichtet und schließlich in einer Verpackungsmaschine von dem Großstapel in Packungseinheiten entnommen, welche jeweils eine genau bestimmte, abgezählte Anzahl von Blättern enthalten und mit der Umverpackung versehen werden. Danach werden diese Packungseinheiten nacheinander wieder übereinander auf den Ladeträger o.dgl. gestapelt, wofür dieser gegenüber dem Abgabeende des Abförderers der Verpackungsmaschine möglichst genau ausgerichtet bereitzustellen ist, damit die Packungseinheiten seitlich nicht über den Ladeträger vorstehen. Die Grundfläche des Ladeträgers steht nach der Aufschichtung zweckmäßig allseits wenige Zentimeter seitlich über die Packungseinheiten vor. Nachdem die Packungseinheiten auf der Palette aufeinander gestapelt sind und so eine palettierte Einheit bilden, wird diese unmittelbar aus der Ladestellung einem Paletten-Abförderer übergeben und durch diesen von der Bereitstellungszone für die Palette entfernt.

Der Förderer ist als ganzes bewegbar, z.B. mit einer Hubeinrichtung motorisch heb- und senkbar. Dadurch kann seine horizontale Förderebene auf unterschiedliche Höhenlagen eingestellt werden. Eine erste Höhenlage kann die sein, in welcher die Förderebene in gleicher Höhe wie eine Zuführebene einer motorisch angetriebenen Fördereinrichtung liegt, durch welche die Palette rechtwinklig quer oder parallel zur Förderrichtung des Förderers an diesen abgegeben bzw. auf diesem abgelegt wird. In einer weiteren Höhenlage kann die Förderebene mit derjenigen des Paletten-Abförderers zusammenfallen. In einer weiteren Höhenlage fällt die Förderebene mit derjenigen des Zuförderers für die Packungseinheiten zusammen. Nach jedem Auflegen einer Packungseinheit durch den Zuförderer wird der Ladeträger um die Höhe bzw. Dicke dieser Packungseinheit abgesenkt, so daß auf letzterer die nächste Packungseinheit mit demselben Zuförderer abgelegt werden kann. Alle genannten Stellungen oder Höhenlagen können somit voneinander verschieden sein.

Damit die Ausrichtmittel die Bewegungen des Förderers, z.B. dessen Förder- bzw. Hubbewegung, nicht hindern, können sie seitlich benachbart zum Förderer bzw. zu dem auf diesem angeordneten Ladeträger liegen, die Position des Ladeträgers berührungslos mit einer Fotozelle o. dgl. erfassen und die Förderbewegung des Förderers sowie des Ladeträgers durch mechanische oder elektrische Unterbrechung dann stillsetzen, wenn der Ladeträger die ausgerichtete Trägerposition erreicht hat. Die Hubbewegung des Förderers erfolgt dann gegenüber diesen Teilen der Ausrichtmittel, welche die Förder- und die Hubbewegung nicht mitmachen. Da die Arbeitsgenauigkeit dieser Teile der Ausrichtmittel mit ihrer Entfernung vom Ladeträger zunimmt und auch die Genauigkeit der Stillsetzung des Förderers Toleranzen unterworfen ist, kann es zweckmäßig sein, hier die Ausrichtgenauigkeit noch zu erhöhen. Die genannten Ungenauigkeiten können sich auch dadurch ergeben, daß der Ladeträger zur schonenden Abstützung der untersten Packungseinheit mit einer Beschichtung aus Kunststoff o. dgl., wie Polyethylen, versehen ist, welche über den Rand der formsteifen Tragfläche und daher auch in Förderrichtung parallel zur Tragfläche vorsteht. Wird die vorauseilende Kante der Beschichtung von der Fotozelle erfaßt, so ergibt sich ein Meßfehler, weil die vorauseilende Kante der Tragfläche dahinter liegt und daher als Bezugsbasis für die Ausrichtung des Ladeträgers nicht dessen Tragfläche bzw. dessen Tragkörper, sondern der nicht tragfähige Überstand der Beschichtung verwendet worden ist. Der Ladeträger wird in diesem Fall in Förderrichtung zu früh angehalten.

Nachteilig ist auch, daß die Beschichtung unregelmäßig vorstehen kann, was dann die Umverpackung der gesamten Paletteneinheit aus Ladeträger und Packungseinheiten erschwert. Weiterhin ist nachteilig, daß die Paletten, in Ansicht auf die Förderebene gesehen, in unterschiedlichen Drehlagen auf dem Förderer bewegt werden können, z.B. derart, daß ihre Seiten- und Endkanten nicht parallel bzw. rechtwinklig zur Förderrichtung liegen. Wird der jeweilige Ladeträger in einer solchen verdrehten Lage in der Ladestation stillgesetzt, so werden die Packungseinheiten derart auf dem Ladeträger bzw. aufeinander abgelegt, daß ihre Außenkanten nicht genau parallel bzw. rechtwinklig zu den unmittelbar benachbarten Außenkanten des Ladeträgers, sondern schräg dazu liegen oder sogar über die Außenkanten des Ladeträgers vorstehen.

Der Erfindung liegt auch die Aufgabe zugrunde, eine Vorrichtung und ein Verfahren zu schaffen, bei welchen Nachteile bekannter Ausbildungen bzw. Nachteile der beschriebenen Art vermieden sind und die insbesondere wiederholt eine sehr genau ausgerichtete Trägerposition in Bezug auf die Förderbewegung bzw. in Bezug auf die Parallelausrichtung gegenüber der Ladestation o. dgl. gewährleistet.

Erfindungsgemäß sind die Ausrichtmittel aus ihrer Arbeitslage in eine weniger störende Ruhelage überführbar, in welcher sie z.B. außerhalb des Förder- oder des Hubweges des Förderers bzw. des Ladeträgers liegen. Dadurch können die Ausrichtmittel, wie Tast-, Erfassungs-, Anschlag- und/oder Verdrehmittel zur Ausführung der jeweils zugehörigen Arbeit sehr nahe an den auf dem Förderer liegenden Ladeträger heranbewegt oder sogar mit diesem in unmittelbare Berührung gebracht werden, ohne dabei den Förderer bzw. dessen Mitnehmer für den Ladeträger selbst zu berühren oder bis an die Förderebene zu reichen. Dadurch kann die Ausrichtgenauigkeit wesentlich erhöht werden. Nachdem die zugehörige Arbeit der Ausrichtmittel an einem Ladeträger erfolgt und dieser z.B. in seiner ausgerichteten Trägerposition festgesetzt ist, können die genannten Ausrichtmittel in ihre Ruhelage überführt werden, in welcher sie die Hubbewegung o. dgl. des Förderers in keiner Weise hindern. Vielmehr kann der Förderer berührungsfrei an diesen Ausrichtmitteln vorbeibewegt werden, die sich in der Ruhelage im Abstand außerhalb des zugehörigen Fördererendes und/oder seitlich benachbart zum Förderer befinden. Die Förderebene des Förderers kann daher oberhalb und unterhalb der Lagerung bzw. Befestigung der Ausrichtmittel am Vorrichtungsgestell bzw. in jeder beliebigen Höhenlage gegenüber den Ausrichtmitteln selbst berührungsfrei liegen.

Die Anschlagmittel bilden vorteilhaft eine einarmig frei ausragende Schranke, die in Arbeitslage parallel zur Förderebene bzw. rechtwinklig zur Förderrichtung frei liegt und mit einem Ende in der Lagerung parallel und/oder rechtwinklig zur Förderebene schwenkbar, verschiebbar und/oder in sich faltbar gelagert ist, um in die Ruhelage bzw. aus dieser zurück in die Arbeitslage bewegt werden zu können. Diese Schranke wirkt als Anschlag, wenn der Ladeträger bei der Förderbewegung an ihr aufläuft und dadurch genau ausgerichtet gegenüber der Station zur Beladung o. dgl. des Ladeträgers stillgesetzt wird.

Zur Dreh- bzw. Parallelausrichtung des Ladeträgers gegenüber dem Förderer sind zweckmäßig Verdrehmittel vorgesehen, welche den Ladeträger mit der Kraft eines motorischen Antriebes insbesondere nur dann in der Förderebene verdrehen, wenn keine genaue Drehausrichtung vorliegt. Die Verdrehmittel erfassen somit eine von der genau ausgerichteten Soll-Drehlage abweichende Ist-Drehlage des Ladeträgers und richten diesen zweckmäßig gleichzeitig mit derjenigen Bewegung aus, welche den Ladeträger in Bezug auf die Position parallel zur Förderbewegung ausrichtet. Zweckmäßig liegt hierzu der Ladeträger in allen Richtungen verschiebbar auf einer die Förderbewegung ausführenden Stützfläche des Förderers, z.B. auf einem Förderband, auf, so daß die Förderbewegung allein durch Reibung zwischen dieser Stützfläche und der Unterseite des Ladeträgers auf diesen übertragen wird. Es ist aber auch eine formschlüssig schiebende oder ziehende Förderung des Ladeträgers durch über die Förderebene hinausreichende Mitnehmer denkbar. Die Förderkraft des Ladeträgers ist zweckmäßig so hoch, daß er bei schrägem Auflaufen gegen die Anschlagmittel so lange verdreht wird, bis keine Drehkräfte mehr auf den Ladeträger wirken bzw. bis die Drehkräfte formschlüssig von den Anschlagmitteln aufgenommen werden und daher die zugehörige Kante des Ladeträgers genau parallel zur Anschlagfläche ausgerichtet ist. Kurz nach Erreichen dieses Momentes wird der auf den Ladeträger wirkende Förderantrieb unterbrochen, z.B. der Mitnehmer bzw. das Förderband oder dessen Antriebsmotor stillgesetzt.

Unabhängig von der beschriebenen Ausbildung können Formmittel vorgesehen sein, um Vorsprünge o. dgl. an einer oder mehreren Außenkanten des Ladeträgers einzuebnen bzw. zu glätten und dadurch an den Verlauf der zugehörigen Außenkante der Tragfläche anzunähern. Solche Vorsprünge können z.B. durch die plastisch verformbare Beschichtung des Ladeträgers gebildet sein. Zur Glättung der Vorsprünge werden diese zweckmäßige gegen die zugehörige Außenkante des Trägerkörpers gequetscht, insbesondere alleine durch den Antrieb der Förderbewegung. Das an den Vorsprüngen angreifende Glättungswerkzeug kann durch den Positionieranschlag gebildet sein.

Um auch solche Ladeträger genau ausrichten zu können, welche aufeinanderfolgend unterschiedliche Breiten bzw. Längen haben, sind Vermessungsmittel vorgesehen, welche diese Abmessung, insbesondere die Abmessung des Ladeträgers parallel zur Förderrichtung, während der Förderbewegung des Ladeträgers erfassen. Z.B. kann ein feststehender Sensor, wie eine Fotozelle, an welchem durch die Förderbewegung der Ladeträger vorbeibewegt wird, aufeinander folgend dessen vorderes und hinteres Ende in einem unbeschichteten Bereich, z.B. unterhalb der Ladeebene, berührungslos erfassen, wobei dann von einem Rechner der Zeitabstand zwischen diesen beiden Erfassungen mit der Fördergeschwindigkeit automatisch zu der genannten Abmessung umgerechnet wird. Über Steuermittel werden dann die Anschlagmittel entsprechend der genannten Abmessung in Förderrichtung verfahren sowie festgesetzt und dadurch so eingestellt, daß ihr zur Förderrichtung paralleler Abstand von der Längsmittelebene der Ladestation gleich der Hälfte dieser Abmessung ist.

Damit die vom Förderer gesonderten bzw. für die Überführung zwischen der Arbeits- und der Ruhelage vorgesehenen Teile der Ausrichtmittel nur dann in Arbeitslage überführt werden, wenn sich ihnen ein Ladeträger o. dgl. nähert bzw. wenn der Förderer die zugehörige Höhenlage einnimmt, sind zweckmäßig stromaufwärts von diesen Teilen Tastmittel vorgesehen, welche die Förderbewegung nicht mit ausführen, sondern die Anwesenheit eines Ladeträgers auf einem vorbestimmten Abschnitt des Förderweges des Förderers erfassen und nur bei Anwesenheit eines Ladeträgers einen Antrieb zur Überführung der genannten Teile der Ausrichtmittel aus der Ruhelage in die Arbeitslage aktivieren. Diese Tastmittel können einen den Ladeträger und den Förderer berührungsfrei erfassenden Sensor, wie eine Fotozelle, umfassen und auch durch die Vermessungsmittel gebildet sein. Es ist aber auch denkbar, sie unmittelbar am Anschlag vorzusehen.

Die Steuermittel sind so beschaffen, daß nach Erfassung der Anwesenheit eines Ladeträgers in einem vorbestimmten Abschnitt der Förderstrecke des Förderers dieser nur noch einen begrenzten Förderweg zurücklegt und dann stillgesetzt wird. Hierfür kann zwar eine wegabhängige Steuerung vorgesehen werden, jedoch erfolgt die Stillsetzung zweckmäßig am Ende eines festgesetzten Zeitablaufes, welcher mit der Erfassung der Anwesenheit des Ladeträgers beginnt. Um dabei auch jede beliebige Drehausrichtung des Ladeträgers durch Anschlag zu gewährleisten, ist der Förderweg des Förderers während dieser Zeitdauer entsprechend größer als der Förderweg des Ladeträgers von der Erfassungsposition bis zur genau ausgerichteten Trägerposition. Nach Erreichen der ausgerichteten Trägerposition gibt eine Rutschkupplung nach, die durch die aneinanderliegenden Flächen des Förderers und des Ladeträgers gebildet und/oder in der Antriebsverbindung für den Fördermitnehmer vorgesehen sein kann.

Besonders zweckmäßig ist es, wenn der Förderer zwei Einzelförderer aufweist, welche unabhängig voneinander Förderund/oder Hubbewegungen ausführen können. Diese Einzelförderer können unabhängig voneinander Ladeträger aufnehmen, in der beschriebenen Weise ausrichten und in der jeweils ausgerichteten Trägerposition mit Packungseinheiten beladen werden. Die Einzelförderer können desweiteren aus einer gemeinsamen Verpackungsstation bzw. Ladestation und/oder aus gesonderten Verpackungsstationen bzw. mit gesonderten Ladestationen beladen werden, die dann zweckmäßig beiderseits seitlich der Einzelförderer einander gegenüberliegen und gegeneinander gerichtete Förder-Zuführbewegungen haben. Besonders zweckmäßig ist es, wenn wenigstens Teile der Ausrichtmittel, wie die genannten Teile oder die Anschlag-, Verdreh-, Glättungsund Tastmittel ggf. einschließlich der Steuermittel und des Rechners, gemeinsam für beide Förderer vorgesehen sind und daher jeweils in eine Arbeitslage oder einen Arbeitszustand für Ladeträger auf jedem der beiden Einzelförderer überführt werden können. Aus der Ruhelage können diese Mittel daher in entgegengesetzten Richtungen in jeweils eine der beiden Arbeitslagen überführt werden.

Durch das erfindungsgemäße Verfahren kann der Ladeträger für die Übernahme der Packungseinheiten gegenüber deren Zuführbahn genau ausgerichtet, dann unter Aufrechterhaltung dieser Ausrichtung zur Übernahme weiterer Packungseinheiten in der Höhe verstellt und schließlich auf ein Höhenniveau gebracht werden, in welchem der Ladeträger aus der bis dahin gegenüber seiner Förderebene aufrecht erhaltenen, ausgerichteten Trägerposition unmittelbar einen Übernahmeförderer abgegeben wird.

Diese und weitere Merkmale der Erfindung gehen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:
- Fig. 1: eine erfindungsgemäße Vorrichtung in Draufsicht und Arbeitslage,
- Fig. 2: die Vorrichtung gemäß Fig. 1 in Förderrichtung gesehen,
- Fig. 3: die Vorrichtung gemäß Fig. 2 in teilweise geschnittener Seitenansicht von rechts,
- Fig. 4: eine weitere Ausführungsform einer Vorrichtung in einer Darstellung entsprechend Fig. 1,
- Fig. 5: die Vorrichtung gemäß Fig. 4 in einer Darstellung entsprechend Fig. 2,
- Fig. 6: eine weitere Ausführungsform einer Vorrichtung, jedoch in Ruhelage,
- Fig. 7: die Vorrichtung gemäß Fig. 6 in Förderrichtung gesehen und
- Fig. 8: eine weitere Ausführungsform einer Vorrichtung in einer Darstellung entsprechend Fig. 4.

Die Vorrichtung 1 dient zur Förderung sowie Ausrichtung eines Körpers oder Ladeträgers 2, der hier als Platte bzw. Palette ausgebildet ist, welche eine mittlere Lage aus im Abstand sowie parallel zueinander liegenden, balkenförmigen Stützgliedern und an diesen befestigten Decklagen aus quer dazu liegenden, streifenförmigen Platten besteht. Die formsteife Palette 2 bildet mit der einen Decklage eine ebene Ladeseite bzw. Tragfläche 5 und ist am Außenumfang von zwei parallelen, seitlichen Kantenflächen 6 sowie zwei rechtwinklig dazu liegenden, zwischen den Stützteilen durchbrochenen Endkantenflächen, nämlich einer Vorderkante 7 sowie einer dazu parallelen Hinterkante 8 begrenzt. Mit der Vorderkante 7 voraus wird die Palette 2 in einer horizontalen Ebene von einem Ende eines Förderers 9 zu dessen anderen Enden bis zur Stillsetzung durch Anschlag kontinuierlich gefördert. Währenddessen werden Ausrichtmittel 10 wirksam, welche die Vorderkante 7 rechtwinklig quer sowie die Seitenkanten 6 parallel zur Förderrichtung 18 ausrichten und ggf. auch die Lage der Palette 2 gegenüber dem Förderer 9 auch quer zur Richtung 18 genau festlegen, z.B. durch auf die Seitenkanten 6 wirkende, stationäre und schräge Leitflächen o. dgl, welche vor und/oder nach Erreichen der Anschlagstellung wirksam sind.

Der Förderer 9 bestimmt eine horizontale Stütz- und Förderebene 11, auf welcher die Palette 2 mit ihrer gleich wie die Tragfläche 5 sowie eben ausgebildeten Unterseite 4 vollflächig aufliegt. Die bei leerer Palette 2 durch deren Oberseite 5 bestimmte Ladeebene 12 liegt um die Dicke der Palette 2 ebenenparallel oberhalb der Ebene 11. Mit jeder, plattenförmig kubischen Packungseinheit 3, welche auf die Oberseite 5 der Palette 2 gestapelt wird, wandert die Ladeebene 12 um die Dicke dieser Packungseinheit 3 nach oben an die Oberseite der jeweils obersten Packungseinheit 3. Die Einheiten 3 werden nacheinander parallel oder rechtwinklig quer zur Förderrichtung 18 der durch die Mittel 10 ausgerichteten Palette 2 in einer Zuführebene 13 zugeführt, welche parallel zu den Ebenen 11, 12 liegt und beim Beladen der Palette 2 mit der jeweiligen Ladeebene 12 zusammenfällt oder geringfügig darüber liegt. Nachdem die Palette 2 mit einer Vielzahl kubisch aufeinander geschichteter, gleicher Packungseinheiten 3 beladen ist, wird sie in einer zu den Ebenen 11 bis 13 parallelen Abführebene 14 parallel oder rechtwinklig quer zur Förderrichtung 18 vom Förderer 9 entfernt. Die die Palette 2 in der Unterseite 4 aufnehmende Abführebene 14 liegt unterhalb der Ebenen 11 bis 13.

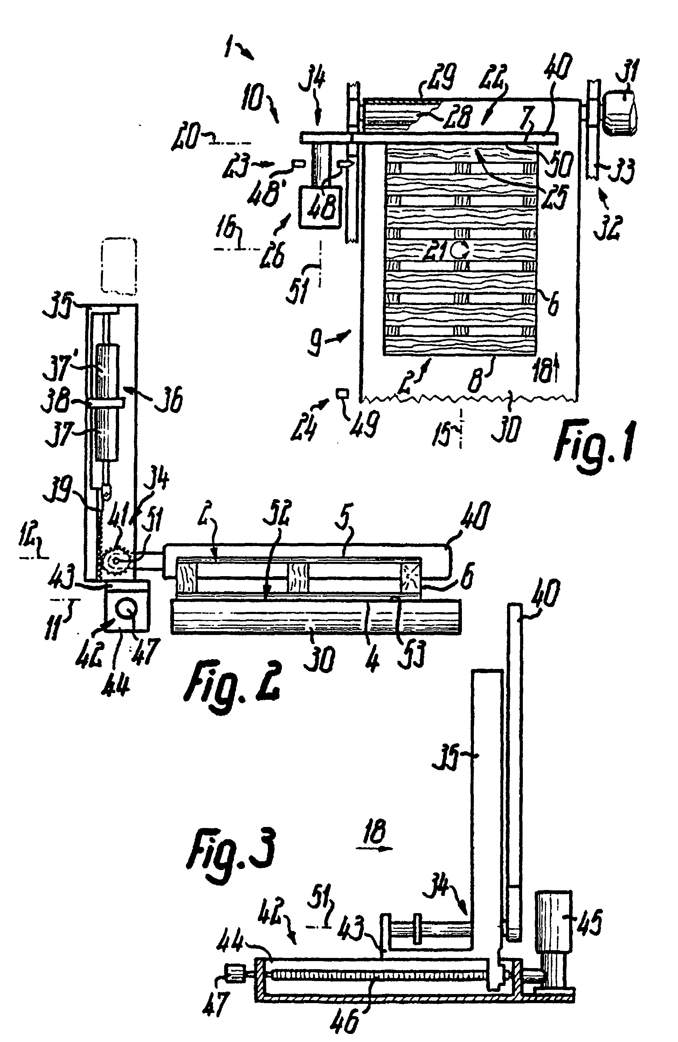

Nach Erreichen der Ausrichtstellung gemäß Fig. 1, in welcher ihre zu den Ebenen 11 bis 14 rechtwinklig querliegende Längsmittelebene 15 parallel zur Förderrichtung 18 liegt, verbleibt die Palette 2 bis zur Abförderung in der Ebene 14 gegenüber dem Förderer 9 in dieser Ausrichtstellung. Die Einheiten 3 werden in der Ebene 13 in einer zur Ebene 15 sowie zur Ebene 18 rechtwinklig querliegenden Längsmittelebene 16 zugeführt, welche mit der entsprechenden, zwischen den Endkanten 7, 8 liegenden Quermittelebene der ausgerichteten Palette 2 zusammenfällt. Die in Draufsicht rechteckige Palette 2 hat hier in Förderrichtung 18 ihre größere Längserstreckung, da sie länglich rechteckig ist.

In der Ausrichtstellung ist die Palette 2 durch Anschlag nur gegenüber einer einzigen Ausrichtebene 20 festgelegt, welche rechtwinklig quer zu den Ebenen 11 bis 15 sowie zur Richtung 18 und parallel zur Ebene 16 sowie zur Richtung 19 liegt. Sofern die Palette 2 bzw. ihre Außenkanten 6 bis 8 beim Auftreffen der Kante 7 auf die Ausrichtebene 20 schräg zur Richtung 18 auf dem Förderer 9 liegt, wird sie durch die Förderkraft solange gegenüber dem Förderer 9 in Richtung 21 um eine zu den Ebenen 11 bis 14 rechtwinklige sowie zu den Ebenen 15, 16, 20 parallele Achse in der Ebene 11 gedreht, bis die Kantenfläche 7 beiderseits der Ebene 15 vollflächig in der Ebene 20 liegt. Zu diesem Zweck ist die Ausrichtebene 20 durch Anschlagmittel 22 definiert, welche während des Ausrichtens feststehen, während der Förderer 9 die Palette 2 mit der Kante 7 gegen sie schiebt.

Desweiteren sind Tast- und Erfassungsmittel 23 vorgesehen, welche die Anwesenheit einer Palette 2 auf dem Förderer 9 feststellen und in ein Steuersignal umwandeln. Weiterhin sind Vermessungsmittel 24 vorgesehen, welche die Länge der Palette 2, nämlich den Abstand zwischen den Endkanten 7, 8 erfassen und ebenfalls in ein Steuersignal umwandeln, durch welches der Abstand zwischen den Ebenen 16, 20 auf die Hälfte des Abstandes der Endkanten 7, 8 der jeweiligen Palette eingestellt wird. Durch die Anschlagmittel 22 sind auch Glättungsmittel 25 für eine Beschichtung gebildet, welche folienartig an der Oberseite 5 vorgesehen ist und über die Kante 7 unregelmäßig über mehrere Millimeter mit einzelnen benachbarten Vorsprüngen vorstehen kann. Diese Beschichtung bildet die eigentliche Tragfläche für die Unterseite der untersten Einheit 3. Beim Auflaufen der Kante 7 gegen die Anschlagmittel 22 werden diese Beschichtungsvorsprünge unter plastischer Verformung zusammengedrückt, bis die Beschichtung nur noch bis an die Ebene der Kantenfläche 7 des Palettenkörpers reicht.

Zur Verstellung des Förderers 9 in Höhenrichtung gegenüber den Anschlagmitteln 22, zur Längsverstellung dieser Anschlagmittel 22 parallel zur Richtung 18 und den Ebenen 11 bis 14 bzw. rechtwinklig quer zu den Ebenen 16, 20 und daher zur Veränderung des Abstandes zwischen den Ebenen 16, 20 sowie zur Querbewegung der Anschlagmittel 22 gegenüber dem Förderer 9 sind Stellmittel 26 vorgesehen. Diese umfassen eine Hubvorrichtung 27, mit welcher der Förderer 9 rechtwinklig quer zu den Ebenen 11 bis 14 und parallel zu den Ebenen 15, 16, 20 gegenüber den Anschlagmitteln 22 vertikal angehoben und abgesenkt werden kann, so daß seine Ebene 11 in jede der Ebenen 12 bis 14 überführt werden kann. Der Förderer 9 weist an beiden Enden walzenförmige Umlenkungen 28 auf, über welche ein endloses Band 29 läuft, dessen oberes, horizontales Trum die Unterseite 4 der Palette 2 unmittelbar aufnimmt und allein durch Friktion in Richtung 18 gegen die vordere Umlenkung 28 sowie die unmittelbar davor liegenden Anschlagmittel 22 mitnimmt, bis, ggf. unter Ausführung der Drehausrichtung 21, die ausgerichtete Trägerposition der Palette 2 erreicht ist.

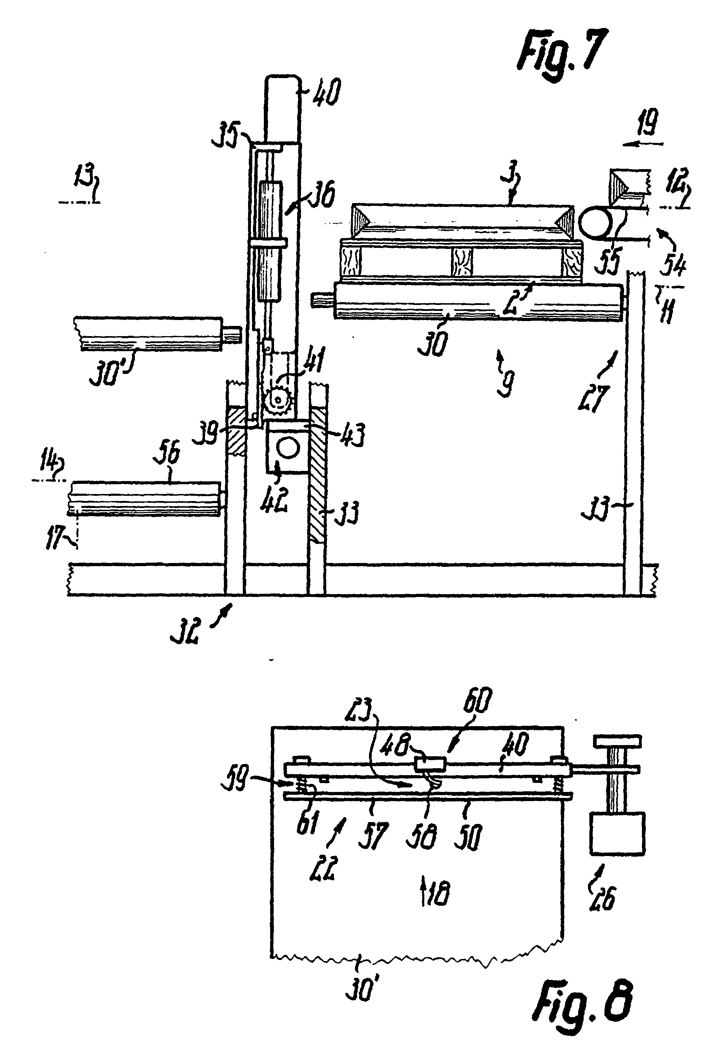

Der Förderer 9 ist hier durch einen einzigen Einzelförderer 30 aus Umlenkungen und Förderband gebildet, kann aber auch gemäß Fig. 7 zwei oder mehr nebeneinander liegende Einzelförderer 30, 30' aufweisen. Diese sind dann mit gesonderten Hubvorrichtungen 27 unabhängig voneinander in der beschriebenen Weise heb- und senkbar sowie durch gesonderte Motoren 31 in Richtung 18 antreibbar. Dieser Antrieb 31 für das Band 29 kann z.B. die vordere Umlenkung 28 und daher das obere Trum des Bandes 29 ziehend antreiben. Die Förderer 30, 30' sind gegenüber einem permanent feststehenden Gestell 32 der Vorrichtung 1 höhenverstellbar, das seitlich benachbart zum Band 29 und den Umlenkungen 28 vertikale Gestellwangen 33 aufweist, in welchen die Umlenkungen 28 einschließlich des Bandes 29 und des Antriebes 31 mit Führungen vertikal stufenlos verschiebbar gelagert sind. Die Hubbewegung kann von einem am Gestell 32 gelagerten Hubmotor angetrieben sein.

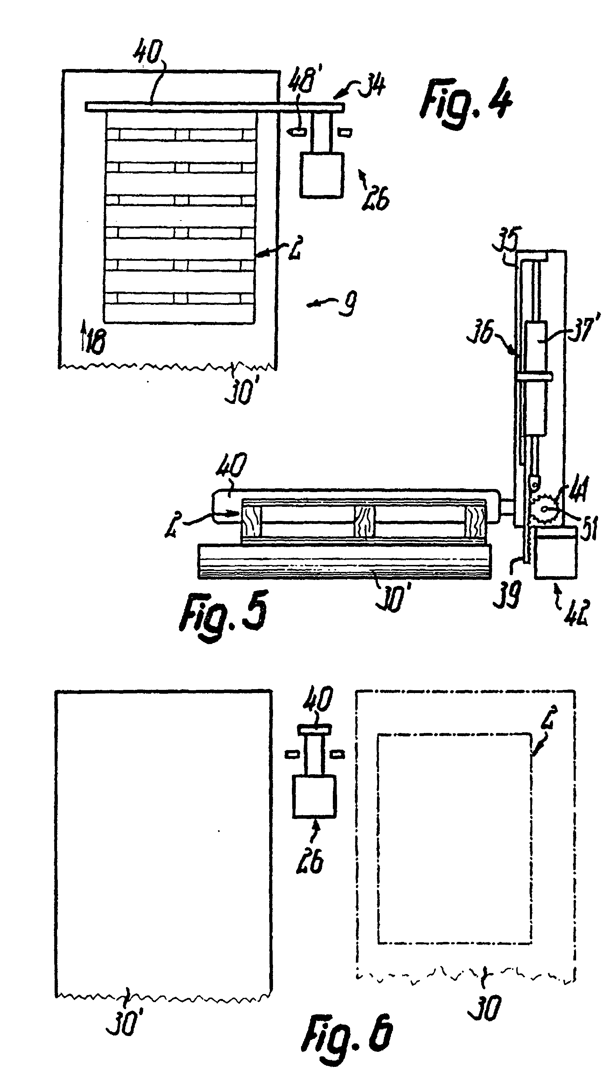

Die Anschlagmittel 22 bzw. die Ausrichtmittel 10 umfassen eine als Schwenkvorrichtung 34 ausgebildete Stellvorrichtung, mit welchen die Anschlagmittel 22 aus dem Hubweg des Förderers 30 bzw. 30' herausbewegt werden können, wobei diese Bewegung in der Ebene 20 liegt. Zu diesem Zweck ist als bei dieser Bewegung fest mit dem Gestell 32 verbundener Träger für einen Anschlag 40 der Anschlagmittel 22 eine vertikal freistehende Säule 35 vorgesehen, die stets seitlich benachbart zum Förderband 29 bzw. zur Außenseite der zugehörigen Wange 33 oder zwischen den Einzelförderern 30, 30' so steht, daß sie deren Hubbewegung auch dann nicht behindert, wenn der jeweilige Einzelförderer in gleicher Höhe zwischen den übereinander liegenden Enden der Säule 35 liegt. Dies gilt auch für den in Ruhelage stehenden Anschlag 40, den Antrieb 36 der Stellvorrichtung 34 und eine weitere Stellvorrichtung 42. Die Ruhelage des Anschlages 40 ist in Fig. 2 strichpunktiert angedeutet sowie aus den Figuren 6 und 7 erkennbar.

Der langgestreckte, permanent vertikal, nämlich rechtwinklig quer zu den Ebenen 11 bis 14 und parallel zu den Ebenen 15, 16, 20 stehende Linearantrieb 36 ist mit einem, nämlich dem oberen Ende unmittelbar am oberen Ende der Säule 35 befestigt und aus zwei seriell miteinander achsgleich verbundenen Einzelantrieben 37, 37' zusammengesetzt, welche unabhängig voneinander jeweils zwischen zwei End- und Anschlagstellungen unabhängig voneinander betrieben, d.h. verlängert und verkürzt werden können. Hier ist jeder Einzelantrieb 37, 37' durch einen Fluidzylinder gebildet, wobei die Kolbenstangen voneinander weggerichtet aus den Zylinderkörpern herausragen, die achsgleich fest miteinander verbunden sind. Die nach oben ragende Kolbenstange des oberen Einzelantriebes 37' ist am oberen Ende der Säule 35 befestigt, so daß eine treibende Verlängerung dieses Einzelantriebes 37' zu einer Verschiebung beider Zylinder oder Antriebsteile gegenüber der Gestellsäule 35 nach unten führt. Die beiden permanent rechtwinklig quer zu den Ebenen 11 bis 14 und parallel zu den Ebenen 15, 16, 20 stehenden Zylinder sind hierfür linear verschiebbar an der Säule 35 mit einem Schlitten 38 geführt, welcher zwischen den beiden Zylindern liegt und deren starre Verbindung miteinander herstellt.

Mit der unteren, nach unten vorstehenden Kolbenstange des unteren Einzelantriebes 37 ist ein als Zahnstange ausgebildetes Treibglied 39 gelenkig verbunden, das in seiner Längsrichtung sowie parallel zum Antrieb 36 linear verschiebbar an der Säule 35 geführt ist und treibend sowie schlupf- oder spielfrei in ein am unteren Ende der Säule 35 drehbar gelagertes Getriebeglied, nämlich ein Zahnrad 41 eingreift, das auch durch ein halbkreisförmiges Radsegment gebildet sein kann. Das Rad 41 ist starr mit einem Ende des Anschlages 40 verbunden, welcher in keiner Stellung unterhalb des unteren Endes der Säule 35 bzw. stets oberhalb der Stellvorrichtung 42 liegt und auch stets berührungsfreien Abstand von der Ebene 11 hat.

Wird gemäß Fig. 7 nur der untere Einzelantrieb 37 bis zu seinem Anschlag verlängert, so wird der Anschlag 40 mit dem Rad 41 aus der horizontalen Arbeitslage um 90° in die Ruhelage überführt, in welcher er, in Richtung 18 gesehen, in Deckung mit der Säule 35 liegen, jedoch nach oben über die Säule 35 vorstehen kann. Wird unter Aufrechterhaltung dieser Stellung des Einzelantriebes 37 nunmehr der Einzelantrieb 37' bis zum Anschlag verlängert und dadurch der Schlitten 38 verschoben, so schwenkt der Anschlag 40 um weitere 90° auf die andere Seite der Säule 35, z.B. in den Bereich des Einzelförderers 30', gegenüber welchem der Anschlag 40 dann in einer Arbeitslage liegt, die gleich wie die anhand des Einzelförderers 30 beschriebene Einzellage ist. Der Anschlag 40 kann aber auch zuerst durch Verlängerung des Einzelantriebes 37' von der Arbeitslage am Einzelförderer 30 in die Ruhelage und dann erst durch Verlängerung des Einzelantriebes 37 in die andere Arbeitslage überführt werden, wobei die beiden Arbeitslagen parallel zu den Ebenen 11 bis 14, 16, 20 und rechtwinklig zur Ebene 15 miteinander fluchten.

Die Stellvorrichtung 42 dient zur stufenlosen Verstellung des Anschlages 40 sowie der Säule 35 mit dem Antrieb 36 und dem Getriebe 39, 41 in sowie entgegen Richtung 18 bzw. parallel zu den Ebenen 11 bis 15 und rechtwinklig quer zu den Ebenen 16, 20 sowohl gegenüber dem Einzelförderer 30, 30' als auch gegenüber dem Gestell 32. Das untere Ende der Säule 35 ist starr an einem Schlitten 43 befestigt, in welchem die gemeinsame Welle der Teile 40, 41 gelagert sein kann und der in der genannten Richtung an der Oberseite einer Führung 44 mit einem Motor oder einem Antrieb 45 verschiebbar geführt ist. Die Führung 44 ist starr am Gestell 32 befestigt und trägt als Antriebsorgan eine zur Verstellrichtung 18 parallele Spindel 46, wie eine Gewindespindel, in welche der Schlitten 43 mit einer Spindelmutter eingreift, so daß entgegengesetzte Drehbewegungen der Spindel 46 zu den genannten Verschiebebewegungen der Säule 35 und des Anschlages 40 führen.

Der Antrieb kann durch einen an der Führung 44 befestigten und fest mit einem Winkelgetriebe verbundenen Motor 45 gebildet sein, dessen Motorachse rechtwinklig zur Spindel 46 und benachbart zu deren einem Ende so liegt, daß der Anschlag 40 zwischen Säule 35 und Antrieb 45 stets mit Abstand oberhalb der Führung 44 liegt. Dadurch benötigt der Antrieb 45 seitlich benachbart zum Einzelförderer 30 bzw. zwischen den Einzelförderern 30, 30' nur wenig Raum, so daß diese Einzelförderer mit einem Abstand nebeneinander liegen können, der wesentlich kleiner als die Breite eines Bandes 29 oder die Hälfte davon ist. Das andere Ende der Spindel 46 ist mit einem Meßwertwandler 47 verbunden, welcher für jede Drehstellung der Spindel 46 und damit für jede Verschiebelage des Anschlages 40 ein Meßwertsignal bereitstellt, welches mit dem steuersignal der Vermessungsmittel 24 automatisch so verrechnet wird, daß der Anschlag 40 auf den für die jeweilige Palette 2 richtigen Abstand zwischen den Ebenen 16, 20 eingestellt wird.

Die Erfassungsmittel 23 weisen zweckmäßig jeweils unmittelbar benachbart und stromaufwärts vom Anschlag 40 ein zwischen den Ebenen 16, 20 wirksames Erfassungsglied, wie einen berührungsfrei arbeitenden Sensor 48, nämlich eine Fotozelle, auf, die parallel zu den Ebenen 11 bis 14, 16, 20 und rechtwinklig zu den Ebenen 15, 16 bzw. zur Richtung 18 gegen die zugehörige Seitenkante 6 der Palette 2 gerichtet ist. Der Sensor 48 könnte zwar am Gestell 32 befestigt sein, ist jedoch zweckmäßig an der verschiebbaren Einheit 35 bis 40, insbesondere am unteren Ende der Säule 35 bzw. auf dem Schlitten 43 befestigt. Für jeden Einzelförderer 30, 30' kann ein gesonderter Sensor 48, 48' mit gleicher Wirkung vorgesehen sein. Bevor die Palette 2 die Ausrichtebene 20 erreicht hat, wird sie vom Sensor 48 bzw. 48' erfaßt und ein von diesem Sensor abgegebenes Steuersignal sorgt dafür, daß der Antrieb 36 den Anschlag 40 in der beschriebenen Weise in die Arbeitslage gegenüber demjenigen Einzelförderer 30, 30' überführt, auf welchem sich die erfaßte Palette 2 befindet.

Die Vermessungsmittel 24 weisen einen stromaufwärts von den Ebenen 16, 20 bzw. den achsgleichen Sensoren 48, 48' liegenden Sensor 49 auf, der ebenfalls als Fotozelle o. dgl. berührungsfrei arbeiten kann und von der Ausrichtebene 20 einen Abstand hat, der größer als der Abstand zwischen den Endkanten 7, 8 der Palette 2 ist. Der gegen dieselbe Seitenkante 6 wie der zugehörige Sensor 48 gerichtete bzw. gleich wie der Sensor 48 ausgerichtete Sensor 49 kann z.B. mit dem Sensor 48 so zusammenwirken, daß letzterer nur die Vorderkante 7 und der Sensor 49 nur die Hinterkante 8 erfaßt, woraus der Abstand zwischen diesen Endkanten 7, 8 errechnet und als Steuersignal dem Antrieb 45 zugeführt wird, um den richtigen Abstand zwischen den Ebenen 16, 20 einzustellen.

Der Anschlag 40 ist als Schranke oder Balken ausgebildet, dessen gegen Richtung 18 weisende, ebene Glättungs- und Anschlagfläche 50 stets in der Ebene 20 liegt, da der Anschlag 40 um eine seitlich benachbart zum Einzelförderer 30, 30' liegende Achse 51 schwenkbar ist, welche parallel zu den Ebenen 11 bis 15 und zur Richtung 18 sowie rechtwinklig quer zu den Ebenen 16, 20 mit gleichen seitlichen Abständen von beiden Einzelförderern 30, 30' liegt. In Arbeitslage liegt die Achse 51 in der Mitte der Höhe der Fläche 50 oberhalb der Ebene 11, so, daß sie mit Abstand oberhalb der unteren Decklage der Palette 2 im Bereich von deren zur Richtung 18 parallelen Längsträgern sowie der oberen Decklage liegt und über die Tragfläche 5 nach oben sowie beiderseits seitlich über die Seitenkanten 6 vorsteht. Die Anschlagfläche 50 braucht dabei jedoch seitlich nicht über das Band 29 bzw. dessen Stützfläche 53 für die Palette 2 vorstehen. In der Antriebsverbindung zwischen dem Motor 31 und der Palette 2 ist eine Rutschkupplung 52 vorgesehen, welche hier durch die nur reibungsschlüssig ineinander greifenden Flächen 4, 53 gebildet ist und es einerseits erlaubt, daß sich die Palette 2 in Richtung 21 gleitend gegenüber der Stützfläche 53 verdreht sowie andererseits, daß die Stützfläche 53 in Richtung 18 an der Fläche 4 gleitend unter der Palette 2 und dem Anschlag 40 durchrutscht, wenn die Palette 2 ihre ausgerichtete Anschlagposition erreicht hat.

Für jeden Einzelförderer 30, 30' ist eine gesonderte Ladestation 54 gemäß Fig. 7 vorgesehen, mit welcher in der Ebene 12 eine Packungseinheit 3 so zugeführt wird, daß diese sich mit ihrer Längsmittelebene in der Ebene 16 bewegt. Bei beiden Einzelförderern 30, 30' kann die zur Richtung 18 rechtwinklig querliegende Zuführung sowohl von der von den Stellmitteln 26, 34, 42 abgekehrten seitenkante 6 oder der diesen Stellmitteln zugekehrten Seitenkante 6, also von beiden Seitenkanten 6 her erfolgen. Gemäß Fig. 7 erfolgt die Zuführung gegen das freie Ende des in Arbeitslage gedachten Anschlages 40. Die Ladestation 54 weist einen von einem Motor angetriebenen Zuführförderer 55, beispielsweise ein Förderband auf, welches bei der Übergabe einer Packungseinheit 3 auf die Palette 2 die zugehörige Seitenkante des Mitnehmers 29 mit Höhenabstand überragen und dadurch von seiner vorderen Walze bzw. Umlenkung die Packungseinheit 3 unmittelbar an die Tragfläche 5 so übergeben kann, daß in Draufsicht das Zentrum der Packungseinheit 3 mit dem Zentrum der Palette 2 zusammenfällt und die rechtwinklig zueinander liegenden Außenkanten der Einheit 3 gegenüber allen parallelen Außenkanten 6 bis 8 der Tragfläche 5 geringfügig zurückversetzt sind.

Nach dem Ausrichten und bei leerer Palette 2 liegt die Tragfläche 5 in den Ebenen 12, 13, während nach dem Auflegen einer oder mehrerer Einheiten 3 auf die Palette 2 gemäß Fig. 7 die Ebenen 12, 13 jeweils durch die Oberseite der obersten Packungseinheit 3 gebildet sind. Entsprechend wird der Einzelförderer 30 bzw. 30' mit der Stellvorrichtung 27 nach jedem Auflegen einer weiteren Packungseinheit 3 mit seiner Ebene 11 um ein entsprechendes Maß abgesenkt. Die Ebenen 11 bis 13 liegen bei der Übergabe der ersten sowie weiterer Packungseinheiten 3 oberhalb der Stellmittel 26, 34, 42 bzw. oberhalb des gelagerten Endes des Anschlages 40 und des Rades 41 in Höhe des Antriebs 36, wobei die Ebenen 12, 13 gegenüber dem Gestell 32 permanent gleiche Höhenlage haben können. Die Ebene 11 kann bis unter die genannten Bereiche der Stellmittel 26 und des Anschlages 40 in die Ebene 14 abgesenkt werden, in welcher ein Abförderer 56 die mit den Packungseinheiten 3 beladene Palette 2 unmittelbar übernimmt und aus der mit der ausgerichteten Trägerposition zusammenfallenden Ladeposition entweder über das Ende 29 in Richtung 18 oder über die Seitenkante des Mitnehmers 29 entsprechend dem Förderer 55 parallel zur Richtung 19 unmittelbar vom Förderer 30 bzw. 30' wegfördert.

Der Förderer 56 kann wie anhand des Förderers 55 beschrieben durch einen Bandförderer gebildet sein, der z.B. so angeordnet ist, daß die Ebenen 15, 17 der beiden einander zugehörigen Förderer 30, 56 zusammenfallen. In Fig. 7 ist der Einfachheit halber nur der rechte Förderer 55 für den Förderer 30 und der linke Förderer 56 für den Förderer 30' dargestellt. Die beiden linken und rechten Förderer 56 liegen zweckmäßig permanent in gleicher Höhe. Dies gilt auch für nicht näher dargestellte, gesonderte Paletten-Zuförderer, von denen jeder zum Auflegen einer Palette 2 unmittelbar auf die Stützfläche 53 mit Abstand stromaufwärts von der Hinterkante 8 der in ausgerichteter Trägerposition befindlichen Palette 2 bzw. stromaufwärts vom Sensor 49 vorgesehen ist.

Dieser Zuförderer kann wie anhand des Ladeförderers 55 beschrieben ausgebildet sein und arbeiten. Seine Zuführrichtung kann parallel zur Richtung 18 oder rechtwinklig quer dazu liegen, wobei zweckmäßig quer ausrichtende Mittel vorgesehen sind, durch welche die Palette 2 seitlich genau positioniert auf der Stützfläche 53 abgelegt und bis zum Erreichen der ausgerichteten Trägerposition gehalten wird. Die Zuführebene des Zuführförderers kann mit jeder der Ebenen 11 bis 14 zusammenfallen oder gegenüber dieser jeweiligen Ebene 11 bis 14 höhenversetzt sein, liegt jedoch zweckmäßig permanent unterhalb der Ebenen 12, 13 und oberhalb der Ebene 14 dann in der Ebene 11, wenn diese mit der Hubvorrichtung 27 auf die Höhenlage unterhalb der Schwenkachse 51 eingestellt ist, in welcher der in Arbeitslage stehende Anschlag 40 parallel zur Ebene 11 im Förderweg der Palette 2 liegt.

Nachdem eine Palette 2 an den Förderer 30 bzw. 30' bzw. in der Zuführebene an die in Förderrichtung 18 laufende Stützfläche 53 übergeben worden ist, wird sie durch die Mittel 24 optisch vermessen und danach wird mit der Stellvorrichtung 42 der Anschlag 40 in bzw. entgegen Richtung 18 so eingestellt, daß der Abstand zwischen den Ebenen 16, 20 gleich der Hälfte des Abstandes zwischen den Kanten 7, 8 ist. Bei der weiteren Bewegung in Richtung 18 betätigt die Palette 2 den Sensor 48 bzw. 48' der Tastmittel 23 und aufgrund des dadurch erzeugten Erfassungssignales wird entweder der Anschlag 40 aus der Ruhelage in die Arbeitslage gegenüber dem zugehörigen Einzelförderer 30 bzw. 30' überführt oder, falls er sich dort bereits befindet, in dieser Arbeitslage gesichert, bevor die Palette 2 die Ebene 20 erreicht hat. Gleichzeitig wird durch dieses Signal ein Zeitsteuerungs- bzw. Verzögerungsglied in Gang gesetzt, welches dafür sorgt, daß die Stützfläche 53 des Einzelförderers 30 bzw. 30' um einen größeren Weg kontinuierlich weiterbewegt wird, als der Abstand der Kante 7 von der Ebene 20 bei der Erfassung durch den Sensor 48 bzw. 48' ist.

Erst nach diesem größeren Weg wird die Stützfläche 53 durch Stillsetzen des Motors 31 angehalten. Der genannte Förderweg der Stützfläche 53 kann gegenüber dem genannten Abstandsmaß der Erfassung um einen Betrag größer sein, der kleiner als die Länge der Palette 2 oder die Hälfte davon ist. Durch diesen verlängerten Förderweg wird erzielt, daß die Palette 2 auch bei Schräglage nach dem ersten Anstoßen der Kante 7 an der Fläche 50 weiter unter Förderkraft steht und so stark gegen die Fläche 50 angepreßt wird, daß sie unter Nachgeben der Rutschkupplung 52 in Richtung 21 gedreht wird, bis sie die genau ausgerichtete Trägerposition erreicht hat. Unmittelbar darauffolgend wird die Förderbewegung der Stützfläche 53 angehalten und danach der Anschlag 40 durch die Stellvorrichtung 34 in die vertikale Ruhelage überführt, so daß nunmehr die Palette 2 allein durch die Reibung zwischen den Flächen 4, 53 lagegesichert frei auf dem Förderer 30 bzw. 30' liegt. Zur Ausrichtung könnte auch der Anschlag 40 mit den Stellmitteln 42 entgegen Richtung 18 gegenüber der stillstehenden Stützfläche 53 an die Kante 7 heranbewegt werden.

Der Förderer 30 bzw. 30' wird nunmehr angehoben, bis die Ebene der Paletten-Tragfläche 5 in der Ebene 13 der Ladestation 54 liegt. Beim Erreichen dieser Höhenlage wird ein Signal ausgelöst, welches den Förderer 55 in Gang setzt und eine Packungseinheit 3 in der beschriebenen Weise auf der Tragfläche 5 ablegt. Ein weiteres Signal läßt die Hubvorrichtung 27 den Förderer 30 bzw. 30' mit Palette 2 und aufgelegter erster Packungseinheit 3 um deren Höhe absenken. Ist die zugehörige Höhenlage erreicht, wird durch ein entsprechendes Signal der Förderer 55 wieder in Gang gesetzt und eine weitere Packungseinheit 3 auf der bereits auf der Palette 2 ausgerichtet liegenden Packungseinheit 3 ebenfalls ausgerichtet abgelegt. In entsprechenden, ebenfalls durch die Steuermittel bewirkten Schritten wird der Förderer 30 bzw. 30' weiter abgesenkt und jeweils eine Packungseinheit 3 aufgelegt, bis die gewünschte Anzahl von Packungseinheiten 3 auf der Palette 2 so aufgeschichtet ist, daß alle einander zugehörigen äußeren Kantenflächen dieser Packungseinheiten 3 rechtwinklig zur Tragfläche 5 miteinander fluchten. Der Förderer 30 bzw. 30' wird nun mit seiner Ebene 11 auf die Ebene 14 abgesenkt oder angehoben. Erreicht er die zugehörige Höhenlage, so wird dadurch ein weiteres Steuersignal ausgelöst, welches den Förderer 30 bzw. 30' und den zugehörigen Abförderer 56 in Gang setzt, so daß die beladene Palette von der Stützfläche 53 unmittelbar an die Stützfläche des Bandes des Förderers 56 übergeben wird.

Dieselben Ausrichtmittel 10 können sowohl für einen gemäß den Figuren 1 und 2 in Richtung 18 rechts von den Stellmitteln 26, 34, 42 liegenden Förderer 9, 30 als auch für einen gemäß den Figuren 4 und 5 links davon liegenden Förderer 9, 30' verwendet werden. Sie können aber auch gemäß den Figuren 6 und 7 für zwei bei der Ausrichtung einer Palette 2 ebenengleich liegende Einzelförderer 30, 30' so vorgesehen sein, daß sie abwechselnd zum Anschlag und zur Ausrichtung an dem einen Förderer 30 oder an dem anderen Förderer 30' in Arbeitslage angeordnet sind und dazwischen der Anschlag 40 eine einzige Ruhelage für beide Arbeitslagen hat. Während an dem einen Einzelförderer ausgerichtet wird, kann dadurch der andere beliebig in der Höhe verfahren werden, um eine Palette vom Paletten-Zuförderer oder eine Packungseinheit 3 vom Förderer 55 zu übernehmen bzw. die Palette an den Abförderer 56 zu übergeben, ohne daß die gleichen Arbeiten oder die Ausrichtarbeit des erstgenannten Einzelförderers unterbrochen werden müßte.

Statt oder zusätzlich zur Schwenkbarkeit um die Achse 51 könnte die schwenkbare Einheit 41, 40 auch um eine davon abweichende, z.B. zur Ebene 11 rechtwinklige Achse derart schwenkbar sein, daß der Anschlag 40 in Ruhelage parallel zur bzw. in Richtung 18 frei ausragt, wodurch weniger Bauhöhe benötigt wird. Dieser Vorteil kann auch erreicht werden, wenn der Anschlag 40 aus der Arbeitslage parallel zu den Ebenen 11 bis 14, 16, 20 horizontal verschiebbar ist, so daß jeweils ein anderes seiner Enden frei ausragt. Auch eine Verlängerung oder Verkürzung des Anschlages 40 zur Überführung von einer Arbeitslage in die Ruhelage bzw. in die andere Arbeitslage ist denkbar, z.B. durch teleskopartige Ausbildung und/oder dadurch, daß der Arm 40 zwei gelenkig miteinander verbundene Längsabschnitte aufweist.

Die vorderen Enden der Einzelförderer 30, 30' bzw. deren Umlenkungen liegen in einer gemeinsamen, zu den Ebenen 16, 20 parallelen Ebene, wobei für ihre Beladung ein gemeinsamer Paletten-Zuförderer oder gesonderte Zuförderer vorgesehen sein können. Insofern können die Einzelförderer 30, 30' spiegelsymmetrisch zu einer zwischen ihnen und parallel zu den Ebenen 15, 17 liegenden Längsmittelebene angeordnet bzw. ausgebildet sein. Dies gilt auch für die Ausricht- und Stellmittel 10, 26, insbesondere wenn sie sich in Ruhelage befinden.

Bei der Ausführungsform nach Fig. 8 ist der Sensor der Tastmittel 23 durch einen Schalter 48 oder Kontakt gebildet, welcher von der Palette 2 während der Förderbewegung in Richtung 18 und nach Anschlagen der Kante 7 an der Fläche 50 sowie nach der Drehausrichtung in Richtung 21 unmittelbar mechanisch betätigt wird. Zu diesem Zweck ist die Fläche 50 an einem von der Stange 40 gesonderten Körper 57, z.B. einer der Stange 40 entgegen Richtung 18 vorgelagerten, formsteifen Druckstange 57 vorgesehen, die in sowie entgegen Richtung 18 gegenüber bzw. an dem Arm 40 mit Führungen 49 gegen die Kraft von Federn 61 linear bewegbar gelagert ist. Die Führungen 59 können durch an der Rückseite der Druckstange 57 befestigte und Bohrungen der Stange 40 verschiebbar durchsetzende Bolzen gebildet sein, welche von den Schraubendruckfedern 61 umgeben sind und mit an der Rückseite der Stange 40 liegenden Köpfen Anschläge bilden, welche die Druckstange 57 in der entlasteten Stellung gegenüber der Stange 40 formschlüssig sichern.

Die Stange 57 kann nur parallel verschiebbar oder auch so gelagert sein, daß sie in Draufsicht gemäß Fig. 8 gegenüber der Stange 40 schräg gestellt werden kann, bis sie an dieser anschlägt und dadurch parallel ausgerichtet wird. Die Kraft der Federn 61 kann im Verhältnis zur Haltekraft der Rutschkupplung 52 so groß gewählt sein, daß beim Auflaufen der Palette zuerst deren Drehausrichtung 21 erfolgt und dann erst die Druckstange 57 bis zum Anschlag an der Stange 40 mitgenommen und dadurch über den Schalter 48 der Antrieb 31 abgestellt wird. Die von der Fläche 50 abgekehrte Rückseite der Stange 57 nimmt dabei das Betätigungsglied 58 des Schalters 48 mit. Die Kraft der Federn 61 kann aber auch so groß gewählt sein, daß die Stange 57 von der Palette 2 zunächst ohne deren Drehausrichtung 21 bis zur Anschlagstellung mitgenommen wird, hierbei den Schalter 48 betätigt und dadurch das genannte Zeitglied in Gang gesetzt wird, welches den Antrieb des Einzelförderers 30' erst dann abschaltet, wenn ganz sicher ist, daß nach dem Anschlagen auch eine eventuell erforderliche Drehausrichtung 21 der Palette 2 stattgefunden hat. Die Stange 57 wird mit der Stange 40 jeweils in die Ruhe- bzw. Arbeitslage überführt und hat, parallel zur Richtung 18 gesehen, etwa gleiche Abmessungen und eine gleiche Lage wie die Stange 40. Statt der Fotozellen 48, 48' können ebenfalls Mikroschalter vorgesehen sein, deren Betätigungsstifte o. dgl. von der laufenden Palette 2 mechanisch betätigt werden.

Durch die erfindungsgemäße Ausbildung ist eine sehr genaue Ausrichtung der Palette 2 für das Beladen, Abfördern o. dgl. gewährleistet, insbesondere auch im Falle verhältnismäßig großer Paletten, die für die Aufnahme von Papierriese geeignet sind, welche ein größeres Format als DIN A4 oder DIN A3 haben. Anstatt die genannten Steuerungsvorgänge durch die elektronischen Steuermittel 60 zu bewirken, kann auch jeder der genannten Steuerungsvorgänge bzw. jedes der genannten Steuersignale manuell unmittelbar ausgelöst werden. Auch können die Paletten 2 manuell auf den Förderer 30 bzw. 30' aufgelegt werden. Die Vorrichtung ist sehr einfach im Aufbau, in der Montage, der Wartung sowie im Betrieb. Alle angegebenen Wirkungen bzw. Eigenschaften, wie Lagebestimmungen, können genau wie beschrieben oder nur etwa bzw. im wesentlichen wie beschrieben, aber auch stark davon abweichend vorgesehen sein, je nach dem welche Anforderung an die Vorrichtung 1 gestellt werden.

## Patentansprüche

1. Vorrichtung zur Bereitstellung eines Ladeträgers (2) für Packungseinheiten (3) o.dgl., wie einer Palette für umverpackte Papierriese, in einer ausgerichteten Trägerposition wobei, mindestens ein in einer Hubrichtung höhenverstellbarer Förderer (30, 30') zur Förderung des Ladeträgers (2) in einer Förderebene (11) und in einer Förderrichtung (18) quer zur Hubrichtung und Ausrichtmittel (10) vorgesehen sind, die in einer Arbeitslage zur ausgerichteten Festsetzung des Ladeträgers (2) gegenüber einer Ladestation (54) o.dgl. ausgebildet sind, **dadurch gekennzeichnet, daß** die Ausrichtmittel (10) mit Positioniermitteln (34) aus der Arbeitslage innerhalb des Hubweges des Förderers (30, 30') in eine Ruhelage außerhalb des Hubweges des Förderers (30, 30') überführbar sind.

2. Vorrichtung nach Anspruch 1, **dadurch gekennzeichnet, daß** die Ausrichtmittel (10) quer zur Förderrichtung (18) von der Ruhelage (Fig. 3) in die Arbeitslage (Fig. 1) bewegbar und in Ruhelage seitlich gegenüber dem Förderer (30, 30') versetzt sind, daß insbesondere die Ausrichtmittel (10) schwenkbar gelagert sind und daß vorzugsweise die Ausrichtmittel (10) in einer zur Förderrichtung (18) querliegenden Ebene (20) bewegbar sind, und/oder daß die Ausrichtmittel (10) Verdrehmittel zur drehenden Ausrichtung (21) des Ladeträgers (2) um eine zur Förderebene (11) quer liegende Ausrichtachse umfassen, daß insbesondere die Verdrehmittel motorisch angetrieben sind und daß vorzugsweise als Antriebskraft für die Verdrehung die Förderkraft des Förderers (30, 30') vorgesehen ist.

3. Vorrichtung nach Anspruch 1 oder 2, **dadurch gekennzeichnet, daß** die Ausrichtmittel (10) unmittelbar an dem Ladeträger (2) angreifende Anschlagmittel (22) umfassen, daß insbesondere die Anschlagmittel (22) in Arbeitslage (Fig. 1) im Förderweg des Ladeträgers (2) liegen und daß vorzugsweise, in Förderrichtung (18) gesehen, die Anschlagmittel (22) in Ruhelage eine wesentlich kleinere Ausdehnung parallel zur Förderebene (11) haben als in Arbeitslage (Fig. 1), und/oder daß die Ausrichtmittel (10) einen in und aus dem Förder- sowie Hubweg des Ladeträgers (2) bewegbaren Ausrichtarm (40) umfassen, daß insbesondere der Ausrichtarm (40) in Arbeitslage (Fig. 1) annähernd parallel zur Förderebene (11) und rechtwinklig quer zur Förderrichtung (18) von einer Lagerung ausragt und daß vorzugsweise der Ausrichtarm (40) in Ruhelage annähernd rechtwinklig quer zur Förderebene (11) nach oben ragt sowie vollständig seitlich benachbart zum Förderer (30, 30') liegt.

4. Vorrichtung nach einem der vorhergehenden Ansprüche, **dadurch gekennzeichnet, daß** die Ausrichtmittel (10) etwa parallel zur Förderrichtung (18) in unterschiedliche Arbeitslagen überführbar sind, daß insbesondere Erfassungsmittel (24) zur Vermessung des auf dem Förderer (30, 30') liegenden Ladeträgers (2) vorgesehen sind und daß vorzugsweise die Ausrichtmittel (10) quer zu einer Zuführrichtung (19) der Ladestation (54) stufenlos bewegbar gelagert sind.

5. Vorrichtung nach einem der vorhergehenden Ansprüche, **dadurch gekennzeichnet, daß** Steuermittel (60) zur motorisch angetriebenen Positionierung der Ausrichtmittel (10) vorgesehen sind, daß insbesondere die Steuermittel (60) Tastmittel (23) zur Erfassung eines vom Förderer (30, 30') zugeführten Ladeträgers (2) sowie Unterbrechungsmittel zur Stillsetzung der Förderbewegung mit einer Zeitverzögerung nach der ersten Berührung der Anschlagmittel (22) durch den Ladeträger (2) umfassen und daß vorzugsweise die Tastmittel (23) zur berührungslosen bzw. berührenden Erfassung des Ladeträgers (2) während der Förderbewegung ausgebildet sind, und/oder daß die Steuermittel (60) zur Berechnung des zur Förderrichtung (18) etwa parallelen Mittenabstandes der Mitte (16) des Ladeträgers (2) von seinem vorauslaufenden Trägerende (7) sowie zur Einstellung der Ausrichtmittel (10) gegenüber der Ladestation (54) auf diesen Mittenabstand ausgebildet sind, daß insbesondere die Ausrichtmittel (10) in der Ruhelage und in der Arbeitslage parallel zur Förderrichtung (18) bewegbar sind und daß vorzugsweise die Tastmittel (23) mit den Ausrichtmitteln (10) parallel bzw. quer zur Förderrichtung (18) stufenlos verstellbar sind.

6. Vorrichtung nach einem der vorhergehenden Ansprüche, **dadurch gekennzeichnet, daß** die Ausrichtmittel (10) einen Lageantrieb (36) umfassen, der etwa parallel zur Förderrichtung (18) bewegbar ist, daß insbesondere der Lageantrieb (36) an einem Schlitten (43) angeordnet ist, an welchem die Anschlagmittel (22) zwischen der Arbeitsund der Ruhelage bewegbar gelagert sind und daß vorzugsweise der Lageantrieb (36) einen an den Ausrichtmitteln (10) in einer Schwenkachse (51) befestigten Läufer (41) umfaßt, in welchen eine treibende Stange (39) eingreift, und/oder daß Tastmittel (23) an den Anschlagmitteln (22) vorgesehen sind, daß insbesondere die Tastmittel (23) einen auf einen Signalschalter (48) wirkenden Auflaufanschlag (57) für den Ladeträger (2) umfassen und daß vorzugsweise der Auflaufanschlag (57) gegen Federkraft durch den Ladeträger (2) parallel verschiebbar an den Anschlagmitteln (22) angeordnet ist (Fig. 8).

7. Vorrichtung nach Anspruch 6, **dadurch gekennzeichnet, daß** der Lageantrieb einen Linearmotor (36) umfaßt, daß insbesondere der Lageantrieb durch mindestens einen Fluidantrieb (37, 37') gebildet ist und daß vorzugsweise die Ausrichtmittel (10) und der Lageantrieb (36) in jeder Lage oberhalb des Schlittens (43) liegen, und/oder daß der Schlitten (43) mit einem Schlittenantrieb (45) verfahrbar ist, daß insbesondere der Schlittenantrieb (45) einen vom Lageantrieb (36) gesonderten Positionierantrieb umfaßt und daß vorzugsweise der Positionierantrieb eine in den Schlitten (43) eingreifende Stellspindel umfaßt.

8. Vorrichtung nach einem der vorhergehenden Ansprüche, **dadurch gekennzeichnet, daß** die Fördermittel (9) zwei Einzelförderer (30, 30') zur voneinander unabhängigen Förderung jeweils eines Ladeträgers (2) umfassen, für deren Ausrichtung gemeinsame Ausrichtmittel (22) vorgesehen sind, daß insbesondere die Anschlagmittel (22) gegenüber jedem der Einzelförderer (30, 30') in die Arbeitslage sowie in eine für beide Einzelförderer (30, 30') gemeinsame Ruhelage überführbar sind und daß vorzugsweise die Einzelförderer (30, 30') parallel nebeneinander angeordnet sowie unabhängig voneinander in Hubrichtung bewegbar sind und/oder daß die Ausrichtmittel (10) in der Ruhelage in einer Lücke zwischen den Einzelförderern (30, 30') liegen bzw. für beide Einzelförderer (30, 30') gesonderte Tastmittel (23) angeordnet sind.

9. Verfahren zur Bereitstellung eines Ladeträgers (2) für Packungseinheiten (3) o.dgl., wie einer Palette für umverpackte Riese, in einer ausgerichteten Trägerposition (Fig. 1), mittels der Vorrichtung (1) nach dem Anspruch 1, **dadurch gekennzeichnet, daß** der Ladeträger (2) an eine Förderbahn (30, 30') übergeben bzw. dann durch Vermittlung einer Förderbewegung gegen einen im Bereich der Förderbahn liegenden Anschlag (40) entlang der Förderbahn bewegt wird, daß nach der ersten Berührung des Anschlages (40) durch den Ladeträger (2) dieser und der Anschlag (40) eine kurze Zeit weiter gegeneinander gedrückt werden und dadurch der Ladeträger (2) stabilisiert am Anschlag (40) angelegt wird, wonach darauffolgend die auf den Ladeträger (2) wirkende Ausrichtkraft aufhebbar und so der Ladeträger (2) auch ohne Anschlag (40) in seiner ausgerichteten Position festsetzbar ist.

10. Verfahren nach Anspruch 9, **dadurch gekennzeichnet, daß** nach dem Ausrichten des Ladeträgers (2) der Anschlag (40) in eine Ruhelage zur Seite bewegt und der Ladeträger (2) am Anschlag (40) vorbei in Höhenrichtung bewegt wird, daß insbesondere der Ladeträger (2) gegenüber einer Ladestation (54) stufenweise um die Höhe der Packungseinheiten (3) abgesenkt wird und daß vorzugsweise nach Aufschichten einer Vielzahl von Packungseinheiten (3) der Ladeträger (2) auf die Höhe eines Übernahmeförderers abgesenkt, dann an diesen unmittelbar übergeben und mit dem Übernahmeförderer (56) von der Förderbahn (30, 30') weggefördert wird.

## Claims

1. A device for providing a load carrier (2) for packaging units (3) or the like, such as a pallet for unpackaged reams of paper, in an oriented carrier position comprising at least one conveyor (30, 30') height-adjustable in a lifting direction for conveying the load carrier (2) in a conveying plane (11) and in a conveying direction (18) transversely to the lifting direction and orienting means (10) configured in a working position for defining the orientation of the load carrier (2) relative to the loading station (54) or the like, **characterized in that** the orienting means (10) are translatable with positioning means (34) from the working position within the lifting travel of the conveyor (30, 30') into a resting position outside of the lifting travel of the conveyor (30, 30').

2. The device as set forth in claim 1, **characterized in that** the orienting means (10) are movable transversely to the conveying direction (18) from the resting position (Fig. 3) into the working position (Fig. 1) and in the resting position are displaced to one side of the conveyor (30, 30'), more particularly the orienting means (10) being swivel-mounted and preferably the orienting means (10) being movable in a plane (20) transversely to the conveying direction (18), and/or the orienting means (10) including turning means for orientation (21) of the load carrier (2) by turning about a orientation axis located transversely to the conveying plane (11), more particularly the turning means being motor-powered and preferably the conveying force of the conveyor (30, 30') being provided as the turning power force.

3. The device as set forth in claim 1 or 2, **characterized in that** the orienting means (10) include stop means (22) directly engaging the load carrier (2), more particularly the stop means (22) in the working position (Fig. 1) being located in the conveying path of the load carrier (2) and preferably, as viewed in the conveying direction (18), the stop means (22) in the resting position featuring a substantially smaller projection parallel to the conveying plane (11) than in the working position (Fig. 1) and/or the orienting means (10) including an orienting arm (40) movable in and out of the conveying path and lifting travel of the load carrier (2), more particularly the orienting arm (40) in the working position (Fig. 1) protruding approximately parallel to the conveying plane (11) and at right angles transversely to the conveying direction (18) from a mount and preferably the orienting arm (40) in the resting position protruding approximately at right angles transversely to the conveying plane (11) upright as well as being located totally to one side juxtaposed to the conveyor (30, 30').

4. The device as set forth in any of the preceding claims, **characterized in that** the orienting means (10) are translatable roughly parallel to the conveying direction (18) into various working positions, more particularly means (24) for sensing the load carrier (2) located on the conveyor (30, 30') being provided and preferably the orienting means (10) being movably mounted infinitely variable transversely to a feed direction (19) of the loading station (54).

5. The device as set forth in any of the preceding claims, **characterized in that** control means (60) are provided for motor-powered positioning the orienting means (10), more particularly the control means (60) including means (23) for sensing a load carrier (2) supplied by the conveyor (30, 30') as well as means for halting the conveying movement with a time delay after first contact of the stop means (22) by the load carrier (2) and preferably the means (23) being configured for contactless or contact sensing the load carrier (2) during the conveying movement and/or the control means (60) being configured to compute the center-spacing roughly parallel to the conveying direction (18) of the centerline (16) of the load carrier (2) from its leading carrier end (7) as well as for setting the orienting means (10) relative to the loading station (54) to said center-spacing, more particularly the orienting means (10) being movable parallel to the conveying direction (18) in the resting position and in the working position and preferably the sensing means (23) being infinitely addjustable with the orienting means (10) parallel or transversely to the conveying direction (18).

6. The device as set forth in any of the preceding claims, **characterized in that** the orienting means (10) comprise a mounting drive (36) movable roughly parallel to the conveying direction (18), more particularly the mounting drive (36) being arranged on a slide (43) on which the stop means (22) is mounted movable between the working position and resting position and preferably the mounting drive (36) including a runner (41) secured to the orienting means (10) in a swivelling axis (51) in which a driving rod (39) engages and/or means (23) being provided at the stop means (22), more particularly the means (23) including an abutment stop (57) acting on a signal switch (48) for the load carrier (2) and preferably the abutment stop (57) being arranged shiftable on the stop means (22) in parallel against the spring force by the load carrier (2) (Fig. 8).

7. The device as set forth in claim 6, **characterized in that** the mounting drive includes a linear motor (36), more particularly the mounting drive being formed by at least one fluid drive (37, 37') and preferably the orienting means (10) and the mounting drive (36) being located in every position above the slide (43) and/or the slide (43) being travelled by a slide drive (45), more particularly the slide drive (45) including a positioning drive separate from the mounting drive (36) and preferably the positioning drive including a positioning spindle engaging the slide (43).

8. The device as set forth in any of the preceding claims, **characterized in that** the conveying means (9) comprise two individual conveyors (30, 30') for conveying one load carrier (2) each independently of the other, for the orientation of which common stop means (22) are provided, more particularly the stop means (22) permitting translation relative to each of the individual conveyors (30, 30') into the working position as well as into a resting position common to both individual conveyors (30, 30') and preferably the individual conveyors (30, 30') being arranged parallel juxtaposed to each other as well as whilst being movable independently of the other in the lifting direction and/or the orienting means (10) being located in the resting position in a gap between the individual conveyors (30, 30') or separate sensoring means (23) being arranged for both individual conveyors (30, 30').

9. A method for providing a load carrier (2) for packaging units (3) or the like, such as a pallet for unpackaged reams of paper, in an oriented carrier position (Fig. 1) by means of the device as set forth in claim 1, comprising the steps: transferring the load carrier (2) to a conveyor path (30, 30') or moving the load carrier (2) along the conveyor path against a stop (40) located in the region of the conveyor path by signalling a conveying movement, continuing to urge the load carrier (2) and orienting arm (40) against each other for a short period following first contact of the stop (40) by the load carrier (2) so that the load carrier (2) is stopped stabilized by the stop (40) and then definining the load carrier (2) in its oriented position even without the stop (40) by cancelling the force orienting the load carrier (2).

10. The method as set forth in claim 9, **characterized in that** after orientation of the load carrier (2) the stop (40) is moved to one side into a resting position and the load carrier (2) is moved past the stop (40) in the lifting direction, more particularly the load carrier (2) being lowered relative to a loading station (54) stepwise by the height of the packaging units (3) and preferably following piling of a plurality of packaging units (3) the load carrier (2) being lowered level with a transfer conveyor and then directly transferred thereto for removal by the transfer conveyor (56) from the conveyor path (30, 30').

## Revendications

1. Dispositif pour la mise à disposition d'un support de chargement (2) pour des unités d'emballage (3) ou similaires, tel qu'une palette pour des rames de papier emballées, dans une position de support ajustée, étant prévus au moins un convoyeur (30, 30') réglable en hauteur dans une direction de course pour le transport du support de chargement (2) dans un plan de transport (11) et transversalement par rapport à la direction de course et des moyens d'orientation (10), qui sont réalisés dans une position de service pour le blocage ajusté du support de chargement (2) par rapport à un poste de chargement (54) ou similaires, **caractérisé en ce que** les moyens d'orientation (10) peuvent être transférés par des moyens de positionnement (34) d'une position de service dans la voie de course du convoyeur (30, 30') dans une position de repos en dehors de la voie de course du convoyeur (30, 30').

2. Dispositif d'après la revendication 1, **caractérisé en ce que** les moyens d'orientation (10) peuvent être déplacés transversalement par rapport à la direction de transport (18) d'une position de repos (fig. 3) dans la position de service (fig. 1) et qu'en position de repos ils sont décalés latéralement par rapport au convoyeur (30, 30'), **en ce que** notamment les moyens d'orientation (10) sont logés de manière pivotante et **en ce que** de préférence les moyens d'orientation (10) peuvent être déplacés dans un plan (20) situé transversalement par rapport à la direction de transport (18), et/ou **en ce que** les moyens d'orientation (10) comprennent des moyens de déplacement angulaire pour l'orientation (21) obtenue par rotation du support de chargement (2) autour d'un axe d'orientation situé transversalement par rapport au plan de transport (11), **en ce que** notamment les moyens de déplacement angulaire sont actionnés par moteur et **en ce que** de préférence la force de transport du convoyeur (30, 30') est prévue en tant que force motrice pour le déplacement angulaire.

3. Dispositif d'après la revendication 1 ou 2, **caractérisé en ce que** les moyens d'orientation (10) comprennent des moyens d'arrêt (22) s'engageant directement sur le support de chargement (2), **en ce que** notamment les moyens d'arrêt (22) en position de travail se trouvent sur la voie de transport du support de chargement (2) et **en ce que** de préférence vus en direction de transport (18), les moyens d'arrêt (22) en état de repos ont une étendue essentiellement inférieure parallèlement au plan de transport (11) par rapport à celle en état de service (fig. 1), et/ou **en ce que** les moyens d'orientation (10) comprennent un bras d'orientation (40) pouvant être déplacé dans la et hors de la voie de transport ainsi que de la voie de course du support de chargement (2), **en ce que** notamment le bras d'orientation (40) en position de service (fig. 1) s'avance à partir d'un logement à peu près parallèlement au plan de transport (11) et transversalement à angle droit par rapport à la direction de transport (18) et **en ce que** de préférence le bras d'orientation (40) en position de repos s'étend vers le haut transversalement à angle droit par rapport au plan de transport (11) ainsi qu'il se trouve entièrement de manière limitrophe à côté du convoyeur (30, 30').

4. Dispositif d'après une des revendications précédentes, **caractérisé en ce que** les moyens d'orientation (10) peuvent être transférés à peu près parallèlement à la direction de transport (18) en différentes positions de service, **en ce que** notamment des moyens de détection (24) sont prévus pour le mesurage du support de chargement (2) se trouvant sur le convoyeur (30, 30') et **en ce que** de préférence les moyens d'orientation (10) sont logés transversalement par rapport à une direction d'amenage (19) du poste de chargement (54), pouvant être déplacés sans graduations.

5. Dispositif d'après une des revendications précédentes, **caractérisé en ce que** des moyens de commande (60) sont prévus pour le positionnement actionné par un moteur des moyens d'orientation (10), **en ce que** notamment les moyens de commande (60) comprennent des moyens d'exploration (23) pour la détection d'un support de chargement (2) amené par le convoyeur (30, 30') ainsi que des moyens d'interruption pour la production d'un arrêt de marche du mouvement de transport avec une temporisation après le premier contact des moyens d'arrêt (22) par le support de chargement (2) et **en ce que** de préférence les moyens d'exploration (23) sont réalisés pour la détection sans contact ou avec contact mécanique du support de chargement (2) pendant le mouvement de transport, et/ou **en ce que** les moyens de commande (60) sont réalisés pour le calcul de l'écart à peu près parallèle à la direction du centre (16) du support de chargement (2) de son extrémité de support (7) en avance ainsi que pour l'ajustement sur cet écart des moyens d'orientation (10) par rapport au poste de chargement (54), **en ce que** notamment les moyens d'orientation (10) sont mobiles parallèlement à la direction de transport (18) en position de repos et en position de service et **en ce que** de préférence les moyens d'exploration (23) sont orientables de manière progressive et continue par les moyens d'orientation (10) parallèlement ou encore transversalement par rapport à la direction de transport (18).

6. Dispositif d'après une des revendications précédentes, **caractérisé en ce que** les moyens d'orientation (10) comprennent un mécanisme d'entraînement de positionnement (36), lequel peut être déplacé à peu près parallèlement à la direction de transport (18), **en ce que** notamment le mécanisme d'entraînement de positionnement (36) est disposé sur un chariot coulissant (43), sur lequel sont logés les moyens d'arrêt (22) de manière mobile entre la position de repos et la position de service et **en ce que** de préférence le mécanisme d'entraînement de positionnement (36) comprend un rotor (41), étant fixé sur les moyens d'orientation (10) dans un axe de pivotement (51), dans lequel s'engage une tige (39) motrice et/ou **en ce que** des moyens d'exploration (23) sont prévus sue les moyens d'arrêt (22), **en ce que** notamment les moyens d'exploration (23) comprennent un arrêt de contact (57) agissant sur un commutateur de signalement (48) pour le support de chargement (2) et **en ce que** de préférence l'arrêt de contact (57) est disposé sur les moyens d'arrêt (22) de manière à pouvoir être déplacé en parallèle par le support de chargement (2) contre une force de ressort (fig. 8).

7. Dispositif d'après la revendication 6, **caractérisé en ce que** le moyen d'entraînement de positionnement comprend un moteur linéaire (36), **en ce que** notamment le moyen d'entraînement de positionnement est formé par au moins une commande hydraulique (37, 37') et **en ce que** de préférence les moyens d'orientation (10) et le mécanisme d'entraînement de positionnement (36) se trouvent en tout état au-dessus du chariot coulissant (43), et/ou **en ce que** le chariot coulissant (43) peut être actionné par un entraînement de chariot coulissant (45), **en ce que** notamment l'entraînement de chariot coulissant (45) comprend un entraînement de positionnement séparé du mécanisme d'entraînement de positionnement (36) et **en ce que** de préférence l'entraînement de positionnement comprend un arbre de réglage s'engageant dans le chariot coulissant (43).

8. Dispositif d'après une des revendications précédentes, **caractérisé en ce que** les moyens de transport (9) comprennent deux convoyeurs (30, 30') individuels pour le transport indépendant d'un seul support de chargement (2) respectif, pour l'orientation desquels sont prévus des moyens d'orientation (22) communs, **en ce que** notamment les moyens d'arrêt (22) par rapport à chacun des convoyeurs individuels (30, 30') sont transférables dans la position de service ainsi que dans une position de repos commune pour les deux convoyeurs individuels (30, 30') et **en ce que** de préférence les convoyeurs individuels (30, 30') sont disposés parallèlement l'un à côté de l'autre ainsi qu'il sont déplaçables en direction de course indépendamment l'un par rapport à l'autre et/ou **en ce que** les moyens d'orientation (10) en position de repos se trouvent dans un interstice entre les convoyeurs individuels (30, 30') ou encore que l'on dispose de moyens d'exploration (23) séparés pour les deux convoyeurs individuels (30, 30').

9. Procédé pour la mise à disposition d'un support de chargement (2) pour des unités d'emballage (3) ou similaires, tel qu'une palette pour des rames de papier emballées, dans une position de support ajustée (fig. 1), au moyen d'un dispositif (1) d'après la revendication 1, **caractérisé en ce que** le support de chargement (2) est remis à une bande de transport (30, 30') ou encore qu'il est ensuite déplacé le long de la voie de transport au moyen d'un mouvement de transport contre un arrêt (40) situé dans le domaine de la voie de transport, **en ce qu'**après le premier contact de l'arrêt (40) par le support de chargement (2), celui-ci et l'arrêt (40) sont poussés encore un certain temps l'un contre l'autre et le support de chargement (2) étant ainsi placé de manière stabilisé auprès de l'arrêt (40), après quoi la force d'orientation agissant sur le support de chargement (2) étant annulable et ainsi le support de chargement (2) pouvant être fixé même sans arrêt (40) dans sa position ajustée.

10. Procédé d'après la revendication 9, **caractérisé en ce qu'**après l'obtention d'un centrage exact du support de chargement (2) l'arrêt (40) est latéralement déplacé dans une position de repos et que le support de chargement (2) est déplacé en hauteur en passant à côté de l'arrêt, **en ce que** notamment le support de chargement (2) est progressivement baissé par rapport à un poste de chargement (54) d'une hauteur correspondant à celle des unités d'emballage (3) et **en ce que** de préférence après l'amoncellement d'un certain nombre d'unité d'emballage (3) le support de chargement (2) est baissé à la hauteur d'un convoyeur de prise en charge, ensuite il est remis à celui-ci et convoyé avec le convoyeur de prise en charge (56) par la bande de transport (30, 30').
